# FASCICULE DE BREVET EUROPEEN

(11) **EP 3 126 232 B1**
(45) Date de publication et mention de la délivrance du brevet: **31.10.2018**
(21) Numéro de dépôt: 15717044.0
(22) Date de dépôt: 30.03.2015
(51) Int. Cl.: B64C 27/00, B64C 27/06, B64C 27/14, F02C 7/272, F01D 13/00

(54) **CHAÎNE MOTRICE POUR HÉLICOPTÈRE INCORPORANT UN MODULE MOTEUR PYROTECHNIQUE D'ASSISTANCE ET HÉLICOPTÈRE LA COMPORTANT**
ANTRIEB FÜR EINEN HUBSCHRAUBER MIT EINEM PYROTECHNISCHEN HILFSANTRIEBSMODUL UND DAMIT AUSGERÜSTETER HUBSCHRAUBER
DRIVE CHAIN FOR A HELICOPTER INCORPORATING A PYROTECHNIC ASSISTANCE DRIVE MODULE AND HELICOPTER COMPRISING SAME

(30) Priorité: 03.04.2014 FR 1452989
(43) Date de publication de la demande: 08.02.2017
(73) Titulaire: Safran Helicopter Engines, 64510 Bordes (FR)
(72) Inventeur: BESSE, Jean-Louis Robert Guy, F-64800 Nay (FR)
(74) Mandataire: Gevers & Orès
(86) Numéro de dépôt international: PCT/FR2015/050817
(87) Numéro de publication internationale: WO 2015/150680

(56) Documents cités:
- EP-A2- 2 703 292
- WO-A1-2013/160590
- WO-A1-2015/118274
- US-A- 3 633 360
- US-A1- 2013 219 905

## Description

### Domaine de l'invention :

La présente invention se rapporte au domaine de la propulsion des hélicoptères. Elle concerne plus particulièrement l'utilisation d'actionneurs pyrotechniques rotatifs permettant d'apporter une puissance additionnelle lors de phases de vol délicates comme l'autorotation.

### Etat de la technique :

Un hélicoptère est classiquement pourvu d'un rotor principal, formant une voilure tournante pour assurer sa sustentation et sa propulsion. Il comporte également un moyen anti-couple qui est souvent formé par un deuxième rotor arrière.

Les hélicoptères monomoteurs présentent des avantages significatifs, notamment en termes de coût de fabrication et de maintenance, par rapport à des hélicoptères à plusieurs moteurs.

Cependant, une panne ou un mauvais fonctionnement du moteur sur un hélicoptère monomoteur, impliquent de la part du pilote, de procéder à la délicate manoeuvre d'autorotation pour un atterrissage d'urgence. Les statistiques montrent que dans certaines conditions, cette manoeuvre peut conduire à un endommagement sérieux de la cellule.

Il existe donc un besoin d'installer un moyen capable de fournir un complément de puissance éventuel de manière très rapide, pour sécuriser la manoeuvre d'autorotation d'un hélicoptère monomoteur en empêchant une chute de tour rotor dans l'une quelconque des phases de cette manoeuvre.

Il a déjà été proposé, dans le document EP2327625, d'installer un tel système de fourniture de puissance de secours sur l'entrée de la boîte de transmission principale qui entraîne la voilure tournant d'un hélicoptère. Ce système utilise un moteur électrique, qui présente l'avantage de pouvoir monter rapidement en rotation et d'être pilotable en puissance en fonction du problème moteur à traiter.

Cependant, une telle solution électromécanique nécessite l'emport de batteries, d'une électronique de commande et d'un moteur électrique. Cet ensemble, notamment les batteries, grève le devis de masse de la cellule alors que son emploi est très sporadique.

Le document US 3633360 propose une système de fourniture de puissance comprenant un générateur de gaz et un dispositif pyrotechnique.

L'invention a pour but de fournir une alternative simple permettant d'éviter de grever le devis de masse de l'hélicoptère.

### Exposé de l'invention :

A cet effet, l'invention concerne une chaîne motrice destinée à entraîner le ou les rotors d'un hélicoptère, comprenant une boîte de transmission principale apte à entraîner le ou les rotors lorsqu'elle est en mouvement, un moteur principal destiné à fournir la puissance pour le vol et au moins un module moteur d'assistance. Le moteur et le module moteur d'assistance sont mécaniquement liés à ladite boîte de transmission principale de manière à pouvoir la mettre en mouvement. La chaîne motrice est remarquable en ce que ledit module moteur d'assistance comporte un dispositif pyrotechnique de génération de gaz pour créer un couple sur un arbre de transmission de puissance relié mécaniquement à la boîte de transmission principale.

Un premier avantage d'un dispositif pyrotechnique est sa densité énergétique. Le moteur d'assistance qui l'utilise peut donc être conçu en grevant moins le devis de masse de la cellule, tout en fournissant une puissance suffisante pour une manoeuvre d'urgence, en apportant un couple qui permet de maintenir le mouvement des rotors.

Un avantage supplémentaire du dispositif pyrotechnique est de simplifier l'électronique embarquée pour le contrôler. La courbe de puissance délivrée dans le temps est une fonction de la conception du dispositif. Le module moteur d'assistance avec le dispositif pyrotechnique est donc calibré lors de sa fabrication pour fournir une courbe de puissance adaptée à l'hélicoptère sans moyen complémentaire de contrôle.

Avantageusement, ledit module moteur d'assistance comporte au moins un moulinet mobile en rotation autour d'un axe de symétrie, ledit moulinet comportant un tambour solidaire d'un arbre de transmission de puissance, au moins une tuyère d'éjection de gaz placée en périphérie du tambour et orientée de manière sensiblement tangentielle par rapport à la rotation autour dudit axe, ledit dispositif pyrotechnique de génération de gaz étant embarqué dans le moulinet et alimentant ladite au moins une tuyère.

Autrement dit les tuyères produisent des jets d'éjections de gaz tangentiels qui permettent de créer un couple sur l'arbre du moulinet. Le dispositif peut ainsi être utilisé pour fournir un couple à l'entrée de la boîte de transmission principale en cas de défaillance du moteur principal et maintenir le mouvement des rotors. Dans l'optique d'une utilisation unique, le dispositif pyrotechnique permet de générer des gaz dans une chambre en amont des tuyères à une pression et une température importantes créant ainsi les poussées et donc les couples nécessaires à l'entraînement de la voilure tournante durant la manoeuvre en cours. Il ne s'agit pas ici obligatoirement de relancer le moteur principal mais de fournir la puissance nécessaire à l'hélicoptère pour terminer une manoeuvre ou effectuer une manoeuvre d'urgence lui permettant de se mettre en sécurité.

Le fait que le dispositif pyrotechnique de génération de gaz soit embarqué dans le moulinet réduit les problèmes de transfert et les pertes lors de son fonctionnement. De plus, le principe du moulinet fait qu'il peut être mis à poste sur la machine tournante et que celle-ci peut l'entraîner en rotation au cours de son fonctionnement normal, lorsque le module moteur d'assistance n'est pas mis à feu. En effet, le moulinet crée peu de pertes par frottements et ne risque pas d'être usé prématurément.

De préférence, le dispositif pyrotechnique de génération de gaz comporte un bloc de propergol solide dans lequel une chambre de combustion alimentant ladite au moins une tuyère est formée. Cela facilite la maintenance du dispositif. Ainsi, il est envisageable de remplacer facilement le dispositif pyrotechnique du module moteur d'assistance après usage.

Avantageusement, le module moteur d'assistance comporte en outre un support dans lequel tourne l'arbre du moulinet et une volute de récupération des gaz entourant radialement le moulinet, solidaire dudit support.

La volute participe à la détente des gaz sortant des tuyères et donc via la poussée de celles-ci, au couple délivré par le moulinet. Il est donc possible d'améliorer le rendement du moulinet en optimisant la forme de cette volute. Un autre avantage de cette volute est d'évacuer les gaz chauds sortant des tuyères, de manière radiale par rapport à l'axe du moulinet, en limitant l'échauffement des équipements environnant le moulinet. Ces gaz peuvent ensuite être dirigés en sortie de la volute vers une zone d'évacuation adaptée.

Ledit module moteur d'assistance peut, si besoin, comporter au moins deux moulinets placés en série pour entraîner un même arbre de transmission de puissance. Un premier avantage de cette disposition est de pouvoir fournir une puissance donnée en combinant plusieurs moulinets standards. Un autre avantage est de pouvoir moduler dans le temps la puissance fournie par le module moteur d'assistance en pilotant le démarrage successif des moulinets pour l'adapter aux besoins d'une manoeuvre.

Ledit module moteur d'assistance peut comporter une sortie mécanique agencée pour entraîner directement une entrée mécanique de la boîte de transmission principale ou pour entraîner un même arbre de transmission de puissance relié à la boîte de transmission principale que le moteur principal.

Lorsque le moteur principal est une turbomachine, ledit module moteur d'assistance peut comporter une sortie mécanique couplée à l'axe d'une turbine de la turbomachine. Avantageusement, ladite turbine est la turbine de puissance de la turbomachine. Cette option, suivant le choix d'implantation, peut permettre d'intégrer le module moteur d'assistance à la turbine et d'améliorer encore le devis de masse.

Avantageusement, le module moteur d'assistance comporte en outre un système d'allumage du ou desdits dispositifs pyrotechniques de génération de gaz, ledit système d'allumage comportant un système de commande pouvant être placé en mode armé ou désactivé. Cela permet en particulier d'éviter un allumage intempestif du système.

L'invention concerne également un hélicoptère comportant une chaîne motrice telle que décrite précédemment.

L'invention concerne aussi un procédé d'entraînement de la voilure tournante d'un tel hélicoptère, où le système d'allumage module moteur d'assistance peut être placé en modes armé, désactivé ou déclenché, comprenant une étape consistant à armer ledit système d'allumage lorsqu'un pilote de l'hélicoptère commande une manoeuvre déterminée, par exemple d'autorotation. Cette étape correspond en particulier au cas où les conditions de sécurité pour un déclenchement sont remplies. Cela permet au système de réagir rapidement en cas de nécessité et d'éviter un risque de déclenchement dans des conditions de vol normal.

### Brève description des figures :

La présente invention sera mieux comprise et d'autres détails, caractéristiques et avantages de la présente invention apparaîtront plus clairement à la lecture de la description qui suit, en référence aux dessins annexés sur lesquels :
La figure 1 présente une vue en perspective d'un moulinet pour un module d'assistance correspondant à l'invention.
La figure 2 présente une coupe d'un demi-moulinet correspondant à l'invention, suivant un plan perpendiculaire à l'axe de rotation et passant par les tuyères.
La figure 3 présente une coupe longitudinale d'un module moteur d'assistance correspondant à l'invention avant son utilisation.
La figure 4 présente schématiquement une vue en perspective d'une disposition des moyens d'évacuation des gaz sur un module moteur d'assistance correspondant à l'invention.
La figure 5 présente schématiquement une coupe, selon un plan perpendiculaire à l'axe de rotation, de la volute d'évacuation des gaz et du moulinet d'un module moteur d'assistance correspondant à l'invention.
La figure 6 présente une coupe longitudinale d'un module moteur d'assistance correspondant à l'invention vers la fin de son allumage.
La figure 7 présente schématiquement un premier mode de réalisation d'une chaîne motrice selon l'invention pour un hélicoptère.
La figure 8 présente schématiquement un deuxième mode de réalisation d'une chaîne motrice selon l'invention pour un hélicoptère.
La figure 9 présente schématiquement un troisième mode de réalisation d'une chaîne motrice selon l'invention pour un hélicoptère.
Les figures 10 à 12 présentent des variantes de réalisation d'un module moteur d'assistance correspondant à l'invention pouvant être utilisées dans les différents modes de réalisation de la chaîne motrice.

### Description détaillée de l'invention :

L'invention concerne l'utilisation d'un module moteur pyrotechnique comme moteur d'assistance dans une chaîne motrice d'un hélicoptère.

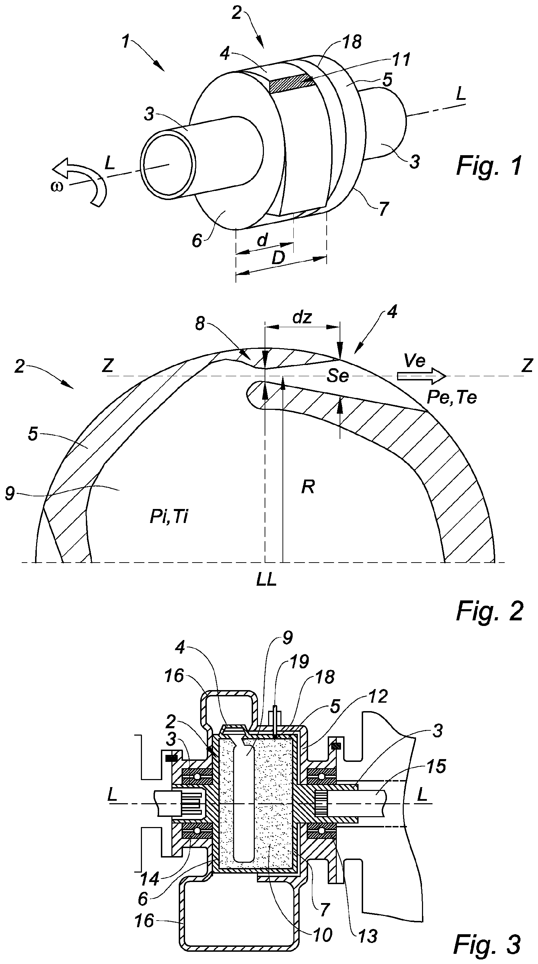

Sur l'exemple présenté, illustré par les figures 1 à 3, ce module moteur comporte un moulinet 1 formé d'un tambour 2 cylindrique et d'un arbre 3 de transmission de puissance, solidaires et de même axe LL autour duquel l'ensemble est destiné à tourner.

Le tambour 2 ayant une largeur donnée D le long de l'axe de rotation LL, plusieurs tuyères 4 sont disposées sur une bande plus étroite de sa paroi cylindrique 5 périphérique, de largeur d. Cette bande est située d'un côté de la paroi cylindrique 5 du tambour 2. En référence aux figures 1 et 2, par exemple, si l'on appelle respectivement, face supérieure 6 du tambour 2, la face transversale de gauche, et face inférieure 7 celle de droite, la bande dans laquelle se trouve les tuyères 4 peut par exemple être excentrée comme représenté, et proche de la face supérieure 6. Les tuyères 4 sont orientées tangentiellement à la paroi cylindrique 5, toutes dans le même sens. Ce sens correspond à la direction du jet de gaz qui doit en sortir et détermine donc, par réaction, une rotation du moulinet 1 en fonctionnement, dans le sens inverse à celui du jet de gaz. Sur l'exemple, les tuyères 4 sont réparties uniformément en azimut et sont au nombre de trois, deux étant visibles sur la figure 1.

Toujours sur l'exemple, les tuyères 4 sont de forme bidimensionnelle. Cela veut dire qu'elles sont définies par leur forme suivant un plan de coupe transversal à l'axe de rotation LL. En référence à la figure 2, la tuyère 4 forme un conduit divergent de longueur dz à partir d'un col 8. Ce col 8 se trouve à un rayon R de l'axe LL du moulinet 1 et la tuyère 4 est orientée selon un axe ZZ sensiblement perpendiculaire au rayon passant par le col 8.

En variante, il est possible, par exemple, de concevoir les tuyères 4 de forme axisymétrique, selon la facilité de dimensionnement et de fabricabilité requise. Elles sont toujours définies, dans ce cas, comme un conduit divergent orienté selon un axe ZZ.

La tuyère 4 est en communication par le col 8 avec une chambre 9 de combustion, devant générer du gaz sous pression quand le moulinet 1 est en fonction. Sur l'exemple présenté, cette chambre de combustion 9 est commune aux trois tuyères 4 placées sur la paroi cylindrique 5 du tambour 2.

Il faut donc alimenter la chambre de combustion 9 en gaz sous pression. En référence à la figure 3 qui présente le moulinet 1 avant son utilisation, on voit que le tambour 2 forme une cavité, entre sa paroi cylindrique 5 et ses faces supérieure 6 et inférieure 7. La cavité intérieure du tambour 2 est remplie par un bloc solide 10 d'un matériau défini pour produire des gaz hautement énergétiques lorsqu'il est enflammé par un dispositif d'ignition, placé au niveau de la chambre de combustion 9 mais non représenté sur les figures. Ce matériau est en général du propergol solide. L'espace laissé libre dans le tambour 2 entre la bande occupée par les tuyères 4 et la face inférieure 7 est dimensionné pour former un réservoir suffisant de propergol dont la combustion générera des gaz pendant le temps nécessaire à la manoeuvre d'urgence.

Dans le moulinet 1 avant son utilisation, la chambre 9 de combustion alimentant les tuyères 4, destinée à recevoir les gaz produits par la combustion du propergol, est creusée dans le bloc 10 de propergol et occupe un espace réduit au niveau des tuyères. De préférence, les tuyères 4 sont bouchées par un opercule 11 éjecté par la pression des gaz de combustion lors de l'allumage, ce qui évite l'introduction de poussières et d'humidité dans la chambre 9 de combustion, hors état déclenché.

Pour former un module moteur, le moulinet 1 est intégré sur un support 12 comportant des roulements 13, 14 dans lesquels tourne l'arbre 3. Comme représenté, l'arbre 3 est destiné à être couplé à un arbre 15 entraînant un autre système mécanique. L'arbre 15 peut être un arbre intermédiaire, dit « à casser », conçu pour rompre si, par accident, le couple transmis dépasse une valeur maximale admissible. Il est d'autre part accouplé, par exemple au moyen de cannelures, sur l'arbre 3 du moulinet 1.

Comme indiqué sur les figures 3 à 5, le support 12 intègre de préférence une volute 16. Cette volute 16 entoure radialement le moulinet 1. Elle est conçue pour permettre la détente des gaz s'échappant des tuyères 4 avant de les évacuer. Avec la partie du support 12 entourant le tambour 2, elle forme un conduit 16 qui s'enroule autour du moulinet 1. La paroi interne de ce conduit 16 est ouverte en vis-à-vis du passage des tuyères 4 pour permettre de recueillir les gaz qui s'en échappent. Sur l'exemple présenté la section radiale du conduit formé par la volute 16 est sensiblement rectangulaire.

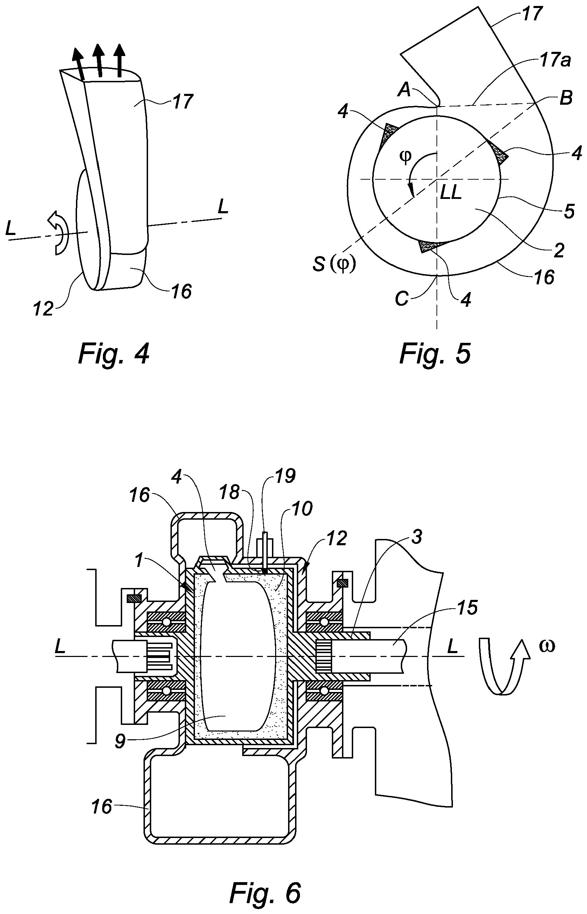

En référence à la figure 5, la section transversale de la paroi externe de la volute 16 a une forme de spirale autour de l'axe LL du moulinet 1. Si l'on appelle ϕ l'azimut autour de l'axe LL, la distance de la paroi externe de la volute 16 à l'axe suit une loi S(ϕ), régulièrement croissante dans cet exemple, en fonction de ϕ entre un point A et un point B en suivant le sens de rotation correspondant à celui du moulinet 1 en fonctionnement. Sur la figure 5, le sens de rotation est antihoraire. Il correspond à des tuyères 4 orientées comme sur la figure 2.

Par ailleurs, la largeur de la volute 16 suivant l'axe LL augmente dans l'exemple donné ici, en allant de A vers B. Cela est illustré par les coupes présentées sur les figures 3 et 6 , qui indiquent la section de la volute 16 dans les demi-plans longitudinaux de coupe, passant, en haut, par le point A et, en bas, par le point C, intermédiaire entre A et B et représenté sur la figure 5. Ainsi, la section du conduit formé par la volute 16 évolue (augmente dans l'exemple donné ici) régulièrement entre les points A et B en azimut ϕ pour accompagner la détente des gaz, selon une loi Sv(ϕ).

Par l'ouverture 17a définie en azimut entre les points B et A, la volute 16 débouche dans une conduite 17 d'échappement destinée à évacuer les gaz, comme représenté sur les figures 4 et 5.

Lorsque le bloc 10 de propergol est mis à feu, la combustion démarre dans la chambre 9 de combustion sous sa forme initiale, présentée à la figure 3. La chambre de combustion 9 se remplit de gaz sous pression et sert de chambre d'alimentation des tuyères 4 en gaz hautement énergétique à des conditions de température Ti et de pression Pi données. Ce gaz s'échappe par les tuyères 4, générant une poussée et créant ainsi un couple sur l'arbre 3 du moulinet 1. Cet arbre 3 en rotation à une vitesse ω, est mécaniquement lié au rotor de l'hélicoptère. Au cours de la progression de la combustion, en référence à la figure 6, le propergol est consommé et le volume de la chambre 9 de combustion des tuyères 4 évolue dans le bloc 10 jusqu'à l'utilisation complète du propergol. Il entre dans la pratique de l'homme du métier de déterminer la forme initiale de la chambre de combustion 9 et la masse initiale du bloc 10 de propergol pour que les conditions de pression Pi et de température Ti des gaz dans la chambre de combustion 9 évoluent durant ce processus pour fournir le couple selon une évolution voulue sur la durée nécessaire.

Durant la phase combustion du propergol, la pression Pi est suffisamment élevée pour que chacune des tuyères 4 soit amorcée, avec un écoulement sonique au col 8. Chaque tuyère 4 crée donc à sa section de sortie un jet de gaz suivant la direction tangentielle ZZ au col 8. Ce jet atteint, à la section de sortie Se de la tuyère 4, une vitesse importante supersonique Ve, alors que la pression Pe et la température Te des gaz ont diminué par rapport à celles des gaz de la chambre de combustion 9. Il en résulte une force F tangentielle, appelée aussi poussée, de sens inverse à la vitesse Ve, qui est fonction du débit massique, de la vitesse du jet qui la traverse et de la différence entre cette pression Pe de sortie du jet et une pression statique autour du moulinet 1 dans la volute 16. Le couple fourni par le moulinet 1 sur l'arbre 3 de transmission de puissance est la somme des couples valant pour chaque tuyère 4 le produit de cette force F par le rayon R du col 8.

Dans un mode de réalisation approprié, le col 8 est rapporté et constitué, par exemple, d'un matériau abradable, tissé et matricé tel que le carbone/céramique ou tout autre dispositif, afin de réduire au maximum le transfert de chaleur par conduction et rayonnement des gaz chauds vers le tambour 2, lors de la combustion du propergol. Il va de soi que la configuration présentée sur les figures n'est qu'un exemple. Le nombre de tuyères 4, ainsi que leur taille et leur répartition en azimut seront adaptés par l'homme du métier en fonction du couple à fournir et de la pression des gaz disponible dans la chambre de combustion 9. De plus, bien que la forme bidimensionnelle des tuyères 4 soit avantageuse en matière d'encombrement pour le dispositif, il est envisageable d'utiliser d'autre formes, en particulier une forme axisymétrique.

Par ailleurs, la forme de la volute 16 participe au rendement des tuyères 4 et donc aux performances du moulinet 1 lorsqu'il est mis à feu. Les gaz de combustion éjectés à la vitesse Ve à la pression Pe et la température Te de chacune des tuyères 4 poursuivent leur détente dans la volute 16, alors que la tuyère 4 tourne à l'intérieur de la volute 16, puis sont évacués à l'extérieur par la conduite d'échappement 17.

La distribution de section de la volute 16 en fonction de l'azimut ϕ entre les point A et B, en référence à la figure 5, est optimisée pour obtenir un bon compromis entre le taux de détente, déterminant le couple fourni par le moulinet 1, et une température d'éjection Te des gaz compatible avec l'environnement du système. Ce compromis tient compte, notamment, des phénomènes de convection forcée dans la volute 16, de la conduction par les moyens d'attache du dispositif et du rayonnement thermique de l'ensemble.

De plus, la volute 16 participe à la protection des équipements environnant le moulinet 1 en guidant les gaz éjectés par les tuyères 4 vers la conduite 17.

Par ailleurs, L'opercule 11 de protection qui bouche chaque tuyère 4 tant que le moulinet 1 n'est pas utilisé est conçu pour être désintégré lors de l'allumage sous l'effet combiné de la pression et de la température des gaz provenant de la combustion du propergol. Ses restes sont donc évacués naturellement avec les gaz lorsque le moulinet 1 démarre.

En référence aux figures 1 et 3, pour déclencher la combustion du bloc 10 de propergol, sur l'exemple présenté, le module moteur pyrotechnique utilise une commande électrique. Dans le moulinet 1, le dispositif d'ignition du bloc 10 de propergol non représenté sur les figures, déjà évoqué, est relié à une piste de contact circulaire 18 affleurant la surface de la paroi cylindrique 5 du tambour 2. Un contacteur 19 électrique à frotteur est positionné en correspondance avec la piste de contact 18 sur le support 12 pour envoyer un courant électrique au dispositif d'ignition. Le contacteur 19 est lui-même relié à un système de commande, non représenté, qui envoie le courant pour enflammer via ce dispositif d'ignition, le propergol en cas de démarrage du module moteur pyrotechnique.

L'ensemble du dispositif d'ignition, du contacteur 19, du système de commande et des moyens de connexion entre ces divers éléments forme un système d'allumage du dispositif pyrotechnique.

Il fait partie de l'invention de pouvoir utiliser d'autres moyens d'ignition du bloc 10 de propergol et/ou de transmission de la commande de mise à feu, comme par exemple une liaison sans fil, ou/et des moyens optiques ou laser.

De manière préférée, le système d'allumage est conçu pour être armé, c'est-à-dire prêt à transmettre un courant suffisant pour déclencher la combustion, ou être désarmé, c'est-à-dire inhibé. La position désarmée présente l'avantage d'éviter des allumages accidentels.

Un second aspect de l'invention concerne l'installation du module moteur pyrotechnique dans la chaîne motrice de l'hélicoptère.

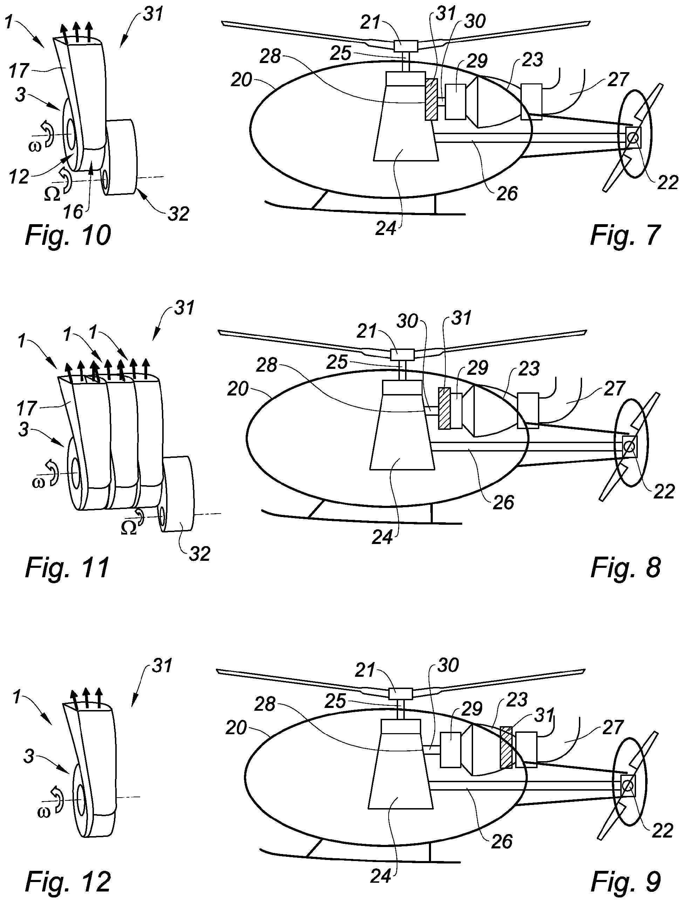

En prenant l'exemple d'un hélicoptère monomoteur, un premier mode de réalisation de cette installation est illustré sur la figure 7.

Sur cet exemple, l'hélicoptère, dont la cellule 20, ici de formule classique, est schématiquement représentée, est équipé d'un rotor principal 21, pour la sustentation et la propulsion, ainsi que d'un rotor de queue 22, anti-couple. La chaîne motrice de l'hélicoptère comprend en particulier, un moteur principal 23 pour fournir la puissance nécessaire au vol de l'hélicoptère et une boîte de transmission principale 24 dont la fonction est de transmettre la puissance du moteur principal aux rotors 21, 22 pour les mettre en mouvement par des mécanismes qui sont schématiquement représentés sur la figure par un arbre 25 allant vers le rotor principal 21 et un arbre 26 allant vers le rotor de queue 22. A noter que le module moteur d'assistance, objet de ce brevet, peut également être intégré dans une chaîne motrice adaptée à d'autres architectures d'hélicoptère, comme, par exemple un hélicoptère à rotors principaux coaxiaux ou muni d'autres dispositifs anti-couple.

Le moteur principal 23 peut être une turbomachine, représentée ici avec son échappement 27, mais ce peut être aussi un moteur à combustion interne ou un moteur électrique.

Généralement, la boîte de transmission principale 24 comporte une entrée mécanique 28 à partir de laquelle sont entraînés les pignoneries internes qui actionnent les arbres 25, 26 allant ici vers les rotors 21, 22. Généralement aussi, le moteur principal comporte une sortie mécanique 29, qui peut être une première série d'engrenages réduisant le nombre de tours, couplée à l'entré mécanique 28 de la boîte de transmission principale 24 par un arbre 30.

Dans le premier mode de réalisation de l'installation, illustré sur la figure 7, un module moteur pyrotechnique 31 est installé à l'entrée mécanique 28 de la boîte de transmission principale 24. Il peut être couplé directement à cette entrée mécanique 28 ou être installé sur l'arbre 30 de transmission du moteur principal 23.

Généralement, en référence à la figure 10, le module moteur pyrotechnique 31 incorpore un ensemble réducteur 32, qui constitue alors sa sortie mécanique. En effet, la conception du module moteur pyrotechnique ne permet pas en général d'obtenir que le la vitesse de rotation ω de l'arbre 3 du moulinet corresponde à la vitesse de rotation Ω nominale que doit avoir l'arbre 30 à l'entrée mécanique 28 de la boîte de transmission principale 24.

Dans une variante de réalisation, représentée sur la figure 11, plusieurs moulinets 1 sont installés en série sur un même arbre 3. Dans ce cas, un seul ensemble de réduction 32 couplé à l'arbre 3 peut être utilisé pour fournir la vitesse de rotation Ω voulue en sortie du module moteur pyrotechnique 30.

Chaque moulinet 1 a son dispositif d'ignition et ses propres contacteurs 19 mais le système d'allumage du module moteur 31 comporte de préférence un système de commande centralisé agencé pour que le système d'allumage du module moteur d'assistance 31 soit armé ou désarmé dans son ensemble.

Le système d'allumage du moteur d'assistance 31 peut être conçu pour que les moulinets 1 soient mis à feu en même temps. Dans ce cas, cela permet d'adapter la puissance du moteur pyrotechnique 31 à divers types d'hélicoptères lors de la conception en n'utilisant qu'un seul type de moulinet 1. Il est également possible de concevoir le système d'allumage du module moteur 31 pour que les moulinets 1 soient mis à feu de manière séquentielle, ce qui permet alors de moduler la puissance suivant les conditions de vol en autorotation rencontrées.

Dans un deuxième mode de réalisation possible, illustré sur la figure 8, le module moteur pyrotechnique 31 est installé sur la sortie mécanique 29 du moteur principal 23.

En général, ce mode de réalisation nécessite, comme le précédent, l'utilisation d'un ensemble réducteur 32 en sortie du module moteur pyrotechnique 31 pour adapter la vitesse de rotation ω de l'arbre 3 des moulinets à la vitesse de rotation Ω de l'arbre 30 transmettant la puissance du moteur principal 23 à l'entrée mécanique 28 de la boîte de transmission principale 24. Les deux variantes de réalisations du module moteur pyrotechnique illustrées sur les figures 10 et 11 sont également possibles.

A priori, le choix entre ces deux premiers modes de réalisation dépendra de la place disponible dans la cellule 20 de l'hélicoptère autour de la chaîne motrice autour des emplacements correspondants.

Dans les deux modes de réalisation, le ou les conduits d'échappement 17 du ou des moulinets 1, peuvent déboucher dans l'atmosphère, sur le haut de la cellule 20. Dans le cas où le moteur principal 23 est une turbomachine, ces conduits d'échappement 17 peuvent déboucher dans l'échappement 23 de la turbomachine.

En référence à la figure 9, un troisième mode de réalisation est envisageable pour l'installation du module moteur pyrotechnique 31. Principalement dans le cas où le moteur principal 23 est une turbomachine, le module moteur peut être couplé à l'arbre d'une turbine de puissance de la turbomachine.

Ce mode de réalisation peut présenter plusieurs avantages. Tout d'abord, la vitesse de rotation d'un moulinet 1 pyrotechnique peut être compatible avec celle de l'arbre de la turbine. Dans ce cas, en référence à la figure 12, le module moteur peut ne pas incorporer d'ensemble réducteur. La sortie mécanique du module moteur 31 est alors constituée par une prise directe de l'arbre de la turbine, par exemple sous forme de cannelures, sur l'arbre 3 du moulinet 1 couplant l'arbre « à casser » 15 représenté sur la figure 3.

En second lieu, le conduit d'échappement 17 du moulinet peut être conformé pour que les gaz sortant du moulinet soient évacués dans le circuit d'échappement des gaz de la turbomachine.

Par ces dispositifs, il est donc possible de concevoir un dispositif plus compact et moins lourd. Il est enfin possible, comme pour les autres modes de réalisation de coupler plusieurs moulinets 1 en série sur l'arbre 3.

Selon un aspect supplémentaire de l'invention, la mise en oeuvre d'un hélicoptère équipé d'une telle chaîne motrice peut comporter des étapes correspondant à différents états du module moteur d'assistance pyrotechnique 31.

Dans une première étape de fonctionnement nominal, par exemple dans les phases de vol non dangereuses, le système de commande du dispositif d'ignition du bloc 10 de propergol est désarmé. Eventuellement le système de commande envoie en continu ou de façon discontinue à sa demande, un faible signal électrique au dispositif d'ignition du bloc 10 de propergol pour détecter une éventuelle discontinuité sur la chaîne de commande. Si un défaut est constaté par la logique de ce système, un traitement de la panne et un signalement adaptés sont effectués. Par ailleurs, le ou les moulinets du module moteur d'assistance sont à l'arrêt si un couplage en roue libre a été effectué ou, sinon, sont entraînés par l'arbre de la chaîne motrice couplé à leur sortie mécanique.

Une étape de fonctionnement critique peut être définie pour des conditions de vol dangereuses ou en cas d'incident probable. Une condition de vol dangereuse peut être par exemple le cas où le pilote commande une phase d'autorotation pour l'atterrissage. Une situation d'incident peut, de son côté, être décrétée lorsque la cinématique de l'entrée mécanique 28 de la boîte de transmission principale 24 fonctionne à un régime en dessous d'un premier seuil, d'alerte, hors phase d'accélération de la cinématique rotor suivant une mise en route du moteur principal 23.

Dans ce cas, le système de commande du dispositif d'ignition du bloc 10 de propergol est armé. La liaison électrique entre le contacteur 19 et la piste de contact 18 permet toujours de détecter d'éventuelles anomalies sur le module moteur pyrotechnique ainsi que d'effectuer un traitement de la panne et un signalement adaptés.

Enfin, une étape de fonctionnement du moteur pyrotechnique d'assistance peut être déclenchée, soit sur commande du pilote, par exemple s'il demande une assistance à l'autorotation, soit de manière automatique en cas d'incident, par exemple lorsqu'en vol le régime d'entrée de la boîte de transmission principale 24 tombe en dessous d'un deuxième seuil.

Dans ce cas par exemple, un signal électrique est envoyé par la chaîne de commande au contacteur à frotteur 19 sur la piste 18 du moulinet 1. Ce signal électrique commande alors la mise à feu du système d'ignition du propergol 10 qui se consume dans la chambre de combustion 9.

C'est alors que le module moteur pyrotechnique 31 crée un couple et entraîne la boîte de transmission principale 24 pour actionner les rotors 21, 22. L'ensemble du système est conçu pour que le couple du ou des moulinets 1 atteigne rapidement la valeur nécessaire pour fournir la puissance attendue pendant le temps nécessaire.

## Revendications

1. Chaîne motrice destinée à entraîner le ou les rotors (21,22) d'un hélicoptère, comprenant une boîte de transmission principale (24) apte à entraîner le ou les rotors (21,22) lorsqu'elle est en mouvement, un moteur principal (23) destiné à fournir la puissance pour le vol et au moins un module moteur d'assistance (31), le moteur principal (23) et le module moteur d'assistance (31) étant mécaniquement liés à ladite boîte de transmission principale (24) de manière à pouvoir la mettre en mouvement, chaîne motrice **caractérisée en ce que** ledit module moteur d'assistance (31) comporte :
- au moins un moulinet (1) mobile en rotation autour d'un axe de symétrie (LL), ledit moulinet comportant un tambour (2) solidaire d'un arbre (3) de transmission de puissance relié mécaniquement à la boite de transmission de puissance, au moins une tuyère (4) d'éjection de gaz placée en périphérie du tambour (2) et orientée de manière sensiblement tangentielle par rapport à la rotation autour dudit axe de symétrie (LL),
- un dispositif pyrotechnique (10, 9, 18) de génération de gaz embarqué dans le moulinet (1) et alimentant ladite au moins une tuyère (4).

2. Chaîne motrice selon la revendication 1, dans laquelle ledit module moteur d'assistance (31) comporte en outre un support (12) dans lequel tourne l'arbre (3) du moulinet et une volute (16) de récupération des gaz entourant radialement le moulinet (1), solidaire dudit support (12).

3. Chaîne motrice selon l'une des revendications 1 ou 2, dans laquelle ledit module moteur d'assistance (31) comporte au moins deux moulinets (1) placés en série pour entraîner un même arbre (3) de transmission de puissance.

4. Chaîne motrice selon l'une des revendications 1 à 3, dans laquelle ledit module moteur d'assistance (31) comporte une sortie mécanique (32) agencée pour entraîner directement une entrée mécanique (28) de la boîte de transmission principale (24).

5. Chaîne motrice selon l'une des revendications 1 à 3, **caractérisée en ce que** ledit module moteur d'assistance (31) comporte une sortie mécanique (32) agencée pour entraîner un même arbre (30) de transmission de puissance relié à la boîte de transmission principale (24) que le moteur principal (23).

6. Chaîne motrice selon l'une des revendications 1 à 3, **caractérisée en ce que** le moteur principal (23) est une turbomachine et ledit module moteur d'assistance (31) comporte une sortie mécanique (32) couplée à l'axe d'une turbine de la turbomachine.

7. Chaîne motrice selon l'une quelconque des revendications 1 à 6, dans laquelle ledit module moteur d'assistance (31) comporte en outre un système d'allumage du ou desdits dispositifs pyrotechniques de génération de gaz (10), ledit système d'allumage pouvant être placé en mode armé ou désactivé.

8. Hélicoptère comportant une chaîne motrice selon l'une des revendications 1 à 7.

9. Procédé d'entraînement de la voilure tournante d'un hélicoptère comportant une chaîne motrice selon la revendication 7, comprenant une étape consistant à armer ledit système d'allumage du module moteur d'assistance (31) lorsqu'un pilote de l'hélicoptère commande une manoeuvre déterminée, par exemple d'autorotation.

## Patentansprüche

1. Antriebskette zum Antrieb des oder der Rotoren (21, 22) eines Hubschraubers, umfassend ein Hauptgetriebe (24), das den oder die Rotoren (21, 22) antreiben kann, wenn es in Bewegung ist, einen Hauptmotor (23) zum Bereitstellen von Leistung für den Flug und mindestens ein Unterstützungsmotormodul (31), wobei der Hauptmotor (23) und das Unterstützungsmotormodul (31) mechanisch mit dem Hauptgetriebe (24) verbunden sind, sodass sie es in Bewegung setzen können, Antriebskette **dadurch gekennzeichnet, dass** das Unterstützungsmotormodul (31) Folgendes aufweist:
- mindestens eine bewegliche Spule (1), die sich um eine Symmetrieachse (LL) dreht, wobei die Spule eine Trommel (2) aufweist, die mit einer Kraftübertragungswelle (3) fest verbunden ist, die mechanisch mit dem Kraftübertragungsgetriebe verbunden ist, mindestens eine Gasausstoßdüse (4), die am Umfang der Trommel (2) angeordnet und im Wesentlichen tangential in Bezug auf die Drehung um die Symmetrieachse (LL) ausgerichtet ist;
- eine pyrotechnische Vorrichtung (10, 9, 18) zum Erzeugen von Gas, die in die Spule (1) eingebettet ist und die mindestens eine Düse (4) speist.

2. Antriebskette nach Anspruch 1, wobei das Unterstützungsmotormodul (31) weiter einen Träger (12), wobei sich die Welle (3) der Spule dreht, und eine Spirale (16) zur Rückgewinnung von Gasen aufweist, die die Spule (1) radial umgibt und die mit dem Träger (12) fest verbunden ist.

3. Antriebskette nach einem der Ansprüche 1 oder 2, wobei das Unterstützungsmotormodul (31) mindestens zwei in Reihe geschaltete Spulen (1) zum Antrieb einer gleichen Kraftübertragungswelle (3) aufweist.

4. Antriebskette nach einem der Ansprüche 1 bis 3, wobei das Unterstützungsmotormodul (31) einen mechanischen Ausgang (32) aufweist, der so angeordnet ist, dass er einen mechanischen Eingang (28) des Hauptgetriebes (24) direkt antreibt.

5. Antriebskette nach einem der Ansprüche 1 bis 3, **dadurch gekennzeichnet, dass** das Unterstützungsmotormodul (31) einen mechanischen Ausgang (32) aufweist, der so angeordnet ist, dass er eine mit dem Hauptgetriebe (24) verbundene gleiche Kraftübertragungswelle (30) antreibt wie der Hauptmotor (23).

6. Antriebskette nach einem der Ansprüche 1 bis 3, **dadurch gekennzeichnet, dass** der Hauptmotor (23) eine Turbomaschine ist und das Unterstützungsmotormodul (31) einen mechanischen Ausgang (32) aufweist, der mit der Achse einer Turbine der Turbomaschine gekoppelt ist.

7. Antriebskette nach einem der Ansprüche 1 bis 6, wobei das Unterstützungsmotormodul (31) weiter ein System zum Zünden der pyrotechnischen Gaserzeugungsvorrichtung(en) (10) aufweist, wobei das Zündsystem aktiviert oder deaktiviert werden kann.

8. Hubschrauber, der einer Antriebskette nach einem der Ansprüche 1 bis 7 aufweist.

9. Verfahren zum Antreiben des Drehflügels eines Hubschraubers mit einer Antriebskette nach Anspruch 7, umfassend einen Schritt des Aktivierens des Zündsystems des Unterstützungsmotormoduls (31), wenn ein Pilot des Hubschraubers ein bestimmtes Manöver, zum Beispiel eine Autorotation, steuert.

## Claims

1. Drive chain for driving the rotor(s) (21, 22) of a helicopter, comprising a main transmission gearbox (24) capable of driving the rotor(s) (21, 22) when said gearbox is moving, a main engine (23) for providing the power for the flight, and at least one assistance drive module (31), the main engine (23) and the assistance drive module (31) being mechanically connected to said main transmission gearbox (24) so as to induce the movement of said gearbox, **characterised in that** said assistance drive module (31) comprises:
- at least one flyer (1) that can rotate about an axis of symmetry (LL), said flyer comprising a drum (2) that is rigidly connected to a power transmission shaft (3) mechanically connected to the power transmission gearbox, at least one gas ejection nozzle (4) located on the periphery of the drum (2) and oriented substantially tangentially to the rotation about said axis of symmetry (LL),
- a pyrotechnic gas generation device (10, 9, 18) which is installed in the flyer (1) and feeds said at least one exhaust nozzle (4).

2. Drive chain according to claim 1, wherein said assistance drive module (31) further comprises a mounting (12) in which the shaft (3) of the flyer rotates, and a volute (16) for recovering the gases, which radially surrounds the flyer (1) and is rigidly connected to said mounting (12).

3. Drive chain according to either claim 1 or claim 2, wherein said assistance drive module (31) comprises at least two flyers (1) arranged in a line for driving the same power transmission shaft (3).

4. Drive chain according to any of claims 1 to 3, wherein said assistance drive module (31) comprises a mechanical output (32) arranged to directly drive a mechanical input (28) of the main transmission gearbox (24).

5. Drive chain according to any of claims 1 to 3, **characterised in that** said assistance drive module (31) comprises a mechanical output (32) arranged to drive the same power transmission shaft (30) connected to the main transmission gearbox (24) as the main engine (23).

6. Drive chain according to any of claims 1 to 3, **characterised in that** the main engine (23) is a turbine engine and said assistance drive module (31) comprises a mechanical output (32) coupled to the spindle of a turbine of the turbine engine.

7. Drive chain according to any of claims 1 to 6, wherein said assistance drive module (31) further comprises a system for igniting the or said pyrotechnic gas generation device(s) (10), it being possible to place said ignition system in an armed mode or a deactivated mode.

8. Helicopter comprising a drive chain according to any of claims 1 to 7.

9. Method for driving the rotary wing of a helicopter comprising a drive chain according to claim 7, comprising a step of arming said system for igniting the assistance drive module (31) when a helicopter pilot orders a predetermined manoeuvre, for example autorotation.
